(19) **Europäisches Patentamt**

**European Patent Office**

**Office européen des brevets**

(11) Veröffentlichungsnummer: **0 299 227 B1**

(12) **EUROPÄISCHE PATENTSCHRIFT**

(45) Veröffentlichungstag der Patentschrift: **11.11.92**

(21) Anmeldenummer: **88109736.4**

(22) Anmeldetag: **18.06.88**

(51) Int. Cl.⁵: **B23D 45/06**

(54) Kaltkreissäge mit beim Vorschub von unten durch eine Auflageplatte eines Auflagetisches nach oben bewegbarem Sägeblatt.

(30) Priorität: **14.07.87 DE 3723215**

(43) Veröffentlichungstag der Anmeldung:
**18.01.89 Patentblatt 89/03**

(45) Bekanntmachung des Hinweises auf die
Patenterteilung:
**11.11.92 Patentblatt 92/46**

(84) Benannte Vertragsstaaten:
**AT BE CH DE ES FR GB IT LI LU NL SE**

(56) Entgegenhaltungen:
**EP-A- 0 284 083          DE-C- 846 616
FR-A- 2 291 818          GB-A- 816 890
GB-A- 2 046 662          US-A- 2 323 248
US-A- 2 513 873**

(73) Patentinhaber: **Kaltenbach, Dieter
Rebweg 33
W-7850 Lörrach(DE)**

(72) Erfinder: **Kaltenbach, Dieter
Rebweg 33
W-7850 Lörrach(DE)**

(74) Vertreter: **Schmitt, Hans, Dipl.-Ing. et al
Patentanwälte Dipl.-Ing H. Schmitt Dipl.-Ing.
W. Maucher Dreikönigstrasse 13
W-7800 Freiburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft eine Kaltkreissäge, bei welcher das Sägeblatt beim Sägen von unten her durch einen Schlitz od.dgl. eine Auflageplatte eines Auflagetisches für das zu bearbeitende Material nach oben bewegbar ist, wobei die Auflageplatte gegenüber dem Maschinengestell und einem feststehenden oberen Tisch-Bereich um eine vertikale Achse drehbar gelagert ist und der Antrieb für das Sägeblatt sowie für seinen Vorschub unterhalb dieser drehbaren Platte angeordnet ist.

Eine derartige Kaltkreissäge ist beispielsweise aus der DE-OS 24 54 717 bekannt. Dabei ist jedoch die Lage des Sägeblattes bzw. seiner Lagerung durch den Schwenkarm vorgegeben. Um nun Querschnitte unterschiedlicher Breiten und Formen jeweils in einem Bereich sägen zu können, wo das Sägeblatt annähernd senkrecht hochkommt, kann die Anschlagkante für das Material in Richtung quer zur Materialachse in Bezug auf den Abstand zur Sägeblattmitte in horizontaler Richtung verstellt werden. Diese Verstellung des Werkstückanschlages hat jedoch zahlreiche Nachteile. Wird die Anschlagkante für die Materialstäbe verstellt, müssen auf der Zu- und auf der Abfuhrseite zwangsläufig auch die Anschläge für das Ausrichten der Materialstäbe sowie entsprechende Elemente für die Materialzufuhr und die Materialabfuhr und das Druckstück für die Materialspannung ebenfalls verstellt werden. Ferner verschiebt sich bei Schrägschnitten, wofür die Auflageplatte drehbar ist, der Schnittpunkt zwischen Schnittebene und Anschlagkante bei der Verstellung des Werkstückanschlages. Dies hat zur Folge, daß der Schlitz im Werkstückanschlag, durch den das Sägeblatt hindurchtreten können muß, ebenfalls verstellt werden muß. Stimmt die Materialanschlagkante nicht mit der Drehmitte des Sägeblattes überein, sind bei Schrägschnitten mit wechselndem Winkel zwei nebeneinander liegende Schlitze für das hochkommende Sägeblatt erforderlich. Wenn die Materialanschlagkante nicht mit dem Drehpunkt für das Sägeblatt übereinstimmt, ergeben sich in Bezug auf einen Längenanschlag bei rechtwinkligen und schrägen Schnitten unterschiedlichen Winkels jeweils unterschiedliche Längen des abgeschnittenen Materiales.

Es besteht deshalb die Aufgabe, eine Kaltkreissäge der eingangs erwähnten Art zu schaffen, bei welcher die Anschlagkante für das Material nicht verändert werden muß, dennoch aber die bestmögliche Zuordnung des Sägeblattes zu dem zu zersägenden Material möglich ist.

Die Lösung dieser scheinbar widersprüchlichen Aufgabe besteht darin, daß das Sägeblatt mit seinem Antrieb auf einem unmittelbar unter der drehbaren Tischplatte angeordneten, quer zur Drehachse der Tischplatte verstellbaren und festlegbaren Schlitten angeordnet ist. Somit kann das Sägeblatt immer in die zum Sägen günstigste Position relativ zu dem zu bearbeitenden Material verschoben werden, der Anschlag für das Material aber unverändert die günstigste Lage relativ zum Drehtisch und zu vor- und nachgeschalteten Aggregaten behalten. Vor allem läßt sich der Schnittbereich des Sägeblattes voll ausnutzen und ein mittiger Anschnitt bei Schrägschnitten erreichen, ohne daß die Materialanschlagkante verstellt werden muß.

Zwar kennt man aus der DE-A-846 616 bereits eine Kaltkreissäge, bei welcher das Sägeblatt von unten her durch eine Tischplatte hochschwenkbar und an einem verschiebbaren Schlitten unterhalb der Tischplatte gelagert ist. Dabei handelt es sich jedoch um eine Kaltkreissäge anderer Gattung, weil die Schwenkbewegung des Sägeblattes nur zur Vorbereitung des eigentlichen Sägevorganges dient und vor dem eigentlichen Sägen erfolgt und weil der das Sägeblatt und dessen Antrieb tragende Schlitten eine andere Aufgabe hat, nämlich zur Durchführung des Vorschubes des Sägeblattes in der vorher eingestellten und dann beibehaltenen Höhenlage dient, also nicht eine Voreinstellung der Ausgangslage des Sägeblattes für ein möglichst günstiges Bearbeiten unterschiedlicher Profile geeignet ist.

Um möglichst kleine Hebelarme an der Sägeblattlagerung und ihren Vorschubelementen sowie dem Schlitten zu haben, ist nach einer besonders wichtigen und vorteilhaften Ausgestaltung der Erfindung vorgesehen, daß das am Rand der drehbaren Tischplatte vorgesehene Wälzlager innerhalb der von der Tischplattendicke eingenommenen Höhe, vorzugsweise an einem am umlaufenden Rand der Tischplatte vorgesehenen Absatz, angeordnet ist und der Schlitten unmittelbar unterhalb der Tischplatte mit seinen in den beiden Verschieberichtungen äußeren Bereichen vorzugsweise über die Abmessung der Tischplatte hinaus bis in den Bereich unterhalb des feststehenden Teiles des Tisches verschiebbar ist. Es ergibt sich dadurch nicht nur eine große Nähe des Schlittens und des darauf befindlichen Sägeblattes zur Tischplatte, sondern auch in erwünschter Weise ein großer Verschiebeweg für den Schlitten, der nicht durch die drehbare Tischplatte und deren Lagerung begrenzt wird. Wäre die Drehlagerung der Tischplatte in bekannter Weise unter dessen Rand vorgesehen, könnte der verschiebbare Schlitten entweder nur innerhalb dieses Randes der Tischplatte verschoben werden, oder er müsste entsprechend tief gesetzt werden, so daß sich daraus auch ein entsprechend langer Leerweg für das Sägeblatt beim Vorschub ergäbe. Durch die erwähnte Anordnung des Lagers innerhalb der von der Tischplattendicke eingenommenen Höhe wird also gleichzeitig eine große Nähe des Sägeblattantriebes zur Tischplatte und dennoch ein über den Tischplattenrand hinausreichender Verschiebeweg des Schlittens ermöglicht.

Dabei ist es sogar möglich, daß die Oberseite des das Sägeblatt und seinen Antrieb tragenden Schlittens unmittelbar unter der Unterseite der Auflageplatte angeordnet ist. Neben dem Antrieb kann der Schlitten auch den Vorschubantrieb für das Sägeblatt tragen. Es ergeben sich dann bezüglich des Vorschubes in jeder Stellung des Schlittens gleichbleibende Kraftrichtungen.

Es ist aber auch möglich, daß der Vorschubantrieb für das Sägeblatt an dem Auflagetisch, insbesondere an der drehbaren Auflageplatte befestigt ist und über Schwenklager einerseits an seiner Halterung und andererseits an einem das Sägeblatt tragenden, vertikal verstellbaren Schlitten oder nach oben schwenkbaren Schwenkarm angreift. Die Sägeblatthalterung wird dabei mit dem Schlitten horizontal verstellt, wodurch sich eine unterschiedliche Schrägstellung des Vorschubantriebes ergibt. Für die erfindungsgemäße Horizontalverstellung des Sägeblattantriebes und des ihn tragenden Schlittens kann eine mit ihrer Achse in Verschieberichtung angeordnete Spindel vorgesehen sein. Dies stellt ein besonders einfaches und dennoch präzises Maschinenelement dar, um eine solche Einstellbewegung durchführen zu können. Dabei kann die für die Verstellung des Horizontal-Schlittens dienende Spindel in eine mit der Tischplatte fest verbundene Mutter eingreifen und an dem Schlitten in einem Axial-Radial-Lager geführt sein. Dadurch ergibt sich, daß die Spindel selbst beim Verdrehen auch die Verstellbewegung des Schlittens mitmacht.

Daraus ergibt sich eine weitere Ausgestaltung der Erfindung dahingehend, daß die Spindel in ihrem über das Maschinengestell überstehenden Bereich als Skalenträger ausgebildet sein kann oder ein auf ein Meßgerät wirkendes Übertragungselement aufweisen kann. Somit wird in vorteilhafter Weise diesem Verstellmittel für den Schlitten eine zusätzliche Funktion übertragen, indem nämlich dadurch auch die jeweilige Lage des Schlittens jederzeit sichtbar gemacht werden kann.

Um das Verdrehen des Drehtisches für unterschiedliche Schrägschnitte leicht durchführen zu können, ohne dabei durch die vorerwähnte Spindel für die Schlittenverstellung behindert zu sein und ohne Durchtrittsschlitze für die Spindel im Maschinengestell zu benötigen, ist es zweckmäßig, wenn die Verstellspindel mit einem aufsteckbaren Antriebselement, vorzugsweise einer Handkurbel, kuppelbar ist, wobei die Kupplungsstelle innerhalb des Maschinengestelles angeordnet ist. Somit braucht beim Verdrehen des Tisches nur die Kurbel abgezogen und nach Erreichen der neuen Position durch eine entsprechende Öffnung wieder eingesteckt zu werden. Dabei kann zweckmäßigerweise diese Kurbel selbst der Skalenträger sein. Für den Antrieb der Spindel kann auch ein Motor vorzugsweise unter der Auflage- oder Tischplatte vorgesehen sein.

Um einen möglichst großen Schlittenweg zu erzielen und mit dem Sägeblatt auch noch in äußere Bereiche des Drehtisches gelangen zu können, kann das Maschinengestell im Wege des Horizontal-Schlittens eine zumindest dessen äußeren Abmessungen entsprechende Lochung für einen teilweisen Durchtritt des Schlittens durch die Wandung des Maschinengestelles haben.

Insgesamt ergibt sich eine Kaltkreissäge, bei welcher trotz der Möglichkeit, unterschiedliche Schnittwinkel einzustellen, und immer mit dem günstigsten Bereich des Sägeblattes an einem zu sägenden Material angreifen zu können, unabhängig von dessen Abmessung, der Seitenanschlag für dieses Material nicht verändert werden muß. Außerdem ergibt sich eine platzsparende Anordnung des Schlittens für das Sägeblatt und dessen Antrieb innerhalb des Drehtisches, wobei der Schlitten in Extremstellungen sogar über den Durchmesser des Drehtisches und von dessen Lagerung hinausragen kann.

Nachstehend ist die Erfindung mit ihren ihr als wesentlich zugehörenden Einzelheiten anhand der Zeichnung noch näher beschrieben.

Es zeigt in schematisierter Darstellung:

Fig. 1 eine Kaltkreissäge, bei welcher die Anschlagkante durch die Mitte eines drehbaren Tisches verläuft und ein im Querschnitt schmales Werkstück an ihr anliegt,

Fig. 2 eine Draufsicht der Anordnung nach Fig. 1,

Fig. 3 eine Seitenansicht der Sägemaschine gemäß Fig. 1, wobei an dem feststehenden Anschlag ein Materialstab größerer Breite anliegt und das Sägeblatt entsprechend seitlich verstellt ist,

Fig. 4 eine Draufsicht der Anordnung nach Fig. 3,

Fig. 5 einen Schnitt durch die Kreissäge gemäß den Figuren 1 und 3, wobei ein unterhalb der drehbaren Tischplatte befindlicher Schlitten neben dem Sägeblatt und dessen Antrieb auch den Vorschubantrieb für das Sägeblatt trägt,

Fig. 6 eine Draufsicht der Kaltkreissäge gemäß Fig. 5, jedoch ohne Anschlag und ohne Spannvorrichtung,

Fig. 7 einen Schnitt durch eine abgewandelte Ausführungsform einer Kaltkreissäge ähnlich der Darstellung der Fig. 5, wobei das Sägeblatt an einem in dem Schlitten gelagerten Schwenkarm vorgesehen ist und der Schlitten einen als Vorschubelement dienenden Arbeitszylinder zum Verschwenken dieses Sägeblattarmes trägt,

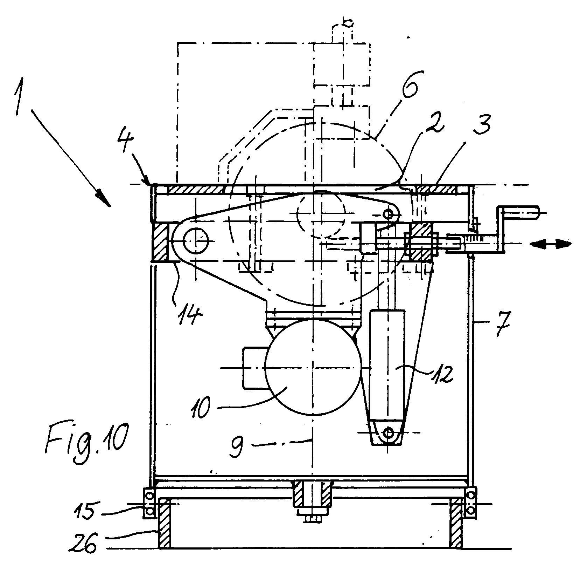

Fig. 8 eine Draufsicht der in Fig.7 dargestellten Kaltkreissäge,

Fig. 9 einen Teilschnitt, bei welchem dargestellt ist, daß das als Arbeitszylinder ausgebildete Vorschubelement an einem mit der drehbaren Tischplatte verbundenen Halter gelagert sein kann sowie

Fig. 10 einen Schnitt durch eine Kaltkreissäge, deren Maschinengestell insgesamt drehbar an einem Sockel gelagert ist.

Eine im ganzen mit 1 bezeichnete Kaltkreissäge hat ein beim Sägen von unten her durch einen Schlitz 2, einer Auflageplatte 3 eines Auflagetisches 4 für das zu bearbeitende Material 5 nach oben bewegbares Sägeblatt 6. Die Auflageplatte 3 ist gegenüber dem Maschinengestell 7 und einem feststehenden oberen Tisch-Bereich 8 um eine vertikale Achse 9 drehbar gelagert. Der Antrieb 10 für das Sägeblatt 6, sowie sein Vorschubantrieb 12 sind dabei unterhalb dieser drehbaren Platte 3 angeordet.

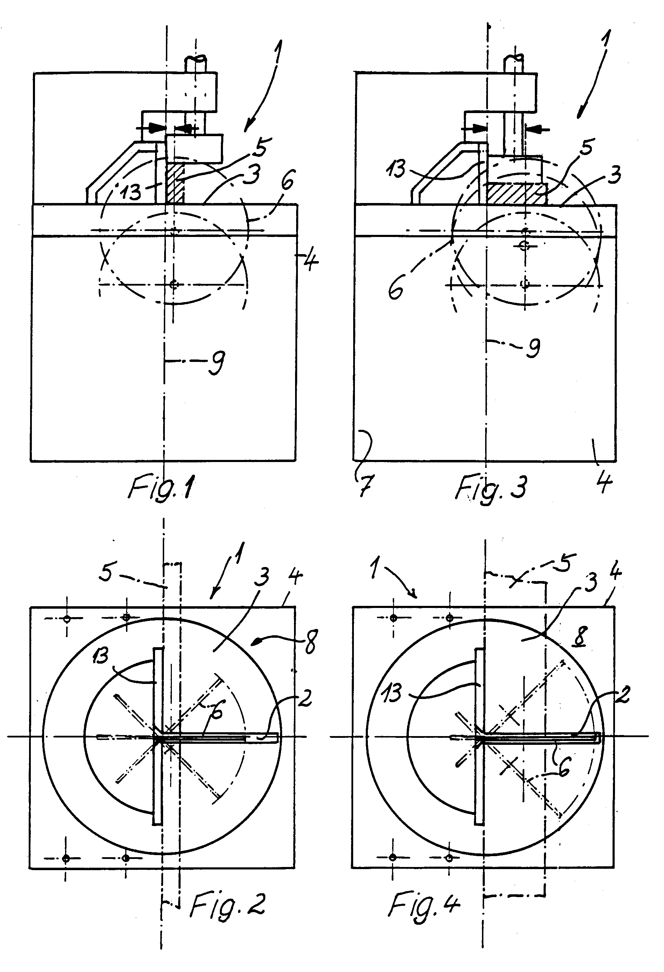

Oberhalb der drehbaren Platte 3 befindet sich ein fester Anschlag 13, der nicht verändert werden soll, selbst wenn sich die Dicke des zu bearbeitenden Materiales 5 in der Weise ändert, wie man es beim Vergleich der Figuren 1 und 3 erkennt, wobei aber dennoch das Sägeblatt 6 immer in günstigster Position an diesem Material 5 angreifen soll. Anhand der Figuren 1 und 3 erkennt man, daß dazu die Lage des Sägeblattes 6 jeweils relativ zu der Auflageplatte 3 und vor allem dem festen Anschlag 13 veränderbar ist, nämlich in horizontaler Richtung wegen der verschiedenen Materialquerschnitt-Breiten. Erfindungsgemäß wird dies dadurch erreicht, daß das Sägeblatt 6 mit seinem Antrieb 10 von einem unmittelbar unter der drehbaren Tischplatte 3 angeordneten, quer zur Drehachse 9 der Tischplatte 3 verstellbaren und festlegbaren Schlitten 14 getragen ist.

Der feste Anschlag 13 braucht also selbst bei einer Verdrehung der Tischplatte 3 gemäß den Figuren 2 und 4 und bei einer Veränderung der Abmessung des Materiales 5 nicht in seiner Lage relativ zur Mitte der Tischpaltte 3 verändert zu werden.

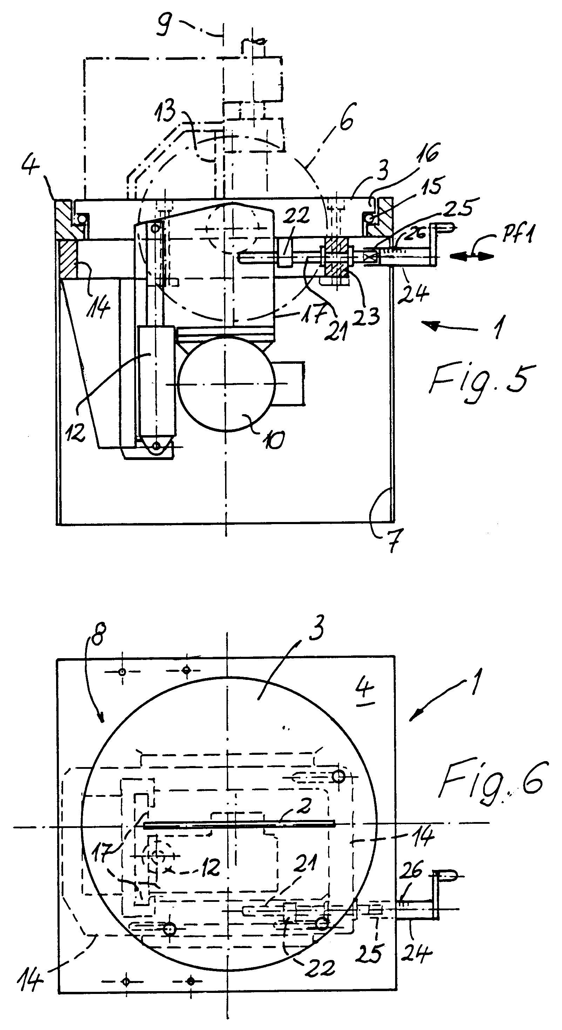

In den Figuren 5, 7 und 9 ist dargestellt, wie erreicht werden kann, daß der Schlitten 14 möglichst nahe unter der Tischplatte 3 angeordnet werden kann, ohne aber durch die Form dieser Tischplatte 3 oder deren Lagerung hinsichtlich seines Verschiebeweges begrenzt zu werden. Dazu ist vorgesehen, daß das am Rand der drehbaren Tischplatte 3 angeordnete Wälzlager 15 innerhalb der von der Tischplattendicke eingenommenen Höhe, im Ausführungsbeispiel an einem am umlaufenden Rand der Tischplatte 3 vorgesehenen Absatz 16 angeordnet ist und der Schlitten 14 somit unmittelbar unterhalb der Tischplatte 3 mit seinen in den beiden Verschiebrichtungen äußeren Bereichen auch über die Abmessung der Tischplatte 3 hinaus bis in den Bereich unterhalb des feststehenden Teiles des Tisches 4 verschiebbar ist.

Dabei befindet sich die Oberseite des das Sägeblatt 6 und seinen Antrieb 10 tragenden Schlittens 14 unmittelbar unter der Unterseite der Auflageplatte 3, also in möglichst günstiger Position zu dem zu sägenden Material 5.

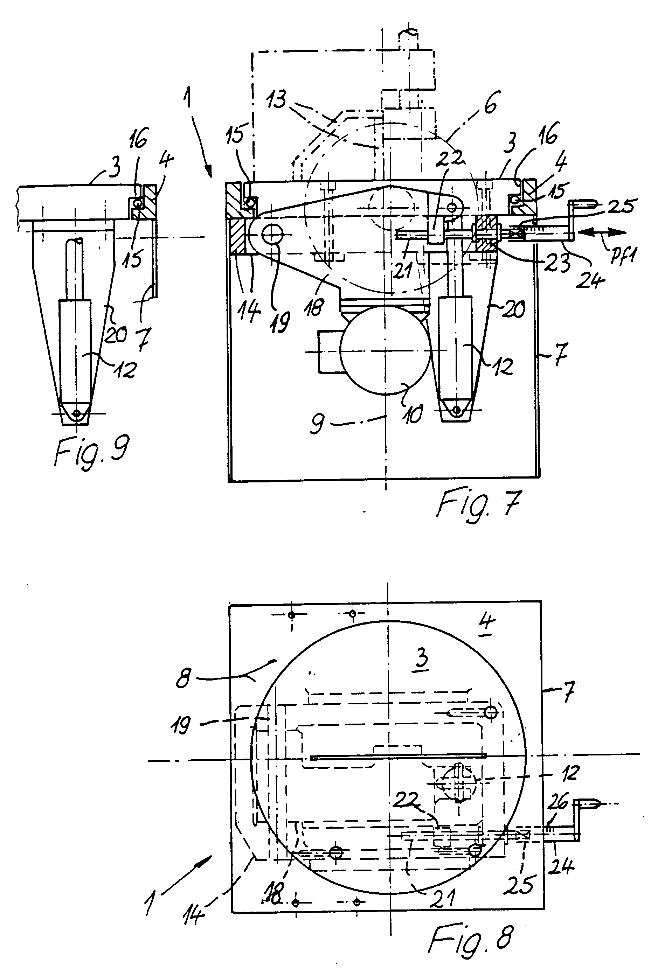

Bei den Ausführungsbeispielen gemäß den Figuren 5 und 6 eine seits sowie 7 und 8 andererseits trägt der Schlitten 14 auch den Vorschubantrieb 12 für das Sägeblatt 6. In Fig. 5 erkennt man dabei als Vorschubantrieb 12 einen Arbeitszylinder, welcher an einem vertikal nach oben verstellbaren Schlitten 17 angreift, der das Sägeblatt 6 und dessen Drehantrieb 10 trägt. Gemäß Fig. 7 kann jedoch das Sägeblatt 6 und sein Drehantrieb 10 auch von einem Schwenkarm 18 gehalten werden, dessen Schwenklager 19 an dem horizontal bewegbaren Schlitten 14 angeordnet ist. Auch in diesem Falle kann als Vorschubantrieb 12 ein Arbeitszylinder dienen, der einerseits an dem freien Ende des Schwenkarmes 18 und andererseits an einer Halterung 20 gelagert ist.

In Fig. 9 ist angedeutet, daß der Vorschubantrieb 12 -wiederum als Arbeitszylinder dargestellt - für das Sägeblatt 6 an dem Auflagetisch und insbesondere der drehbaren Auflageplatte 3 befestigt sein kann, wobei er über Schwenklager einerseits an seiner Halterung 20 und andererseits an einem das Sägeblatt tragenden, vertikal verstellbaren Schlitten 17 gemäß Fig. 5 oder einem nach oben schwenkbaren Schwenkarm 18 gemäß Fig. 7 angreifen kann. Dabei ist die Halterung 20 in diesem Falle nicht am Schlitten 14, sondern an der drehbaren Auflageplatte 3 befestigt.

Für die Horizontalverstellung des Sägeblattantriebes und vor allem des ihn tragenden Schlittens 14 ist in allen dargestellten Ausführungsbeispielen eine mit ihrer Achse in Verschieberichtung angeordnete Spindel 21 vorgesehen. Dabei greift diese für die Verstellung des Horizontal-Schlittens 14 dienende Spindel 21 in eine mit der drehbaren Tischplatte 3 fest verbundene Mutter 22 ein und ist an dem Schlitten 14 in einem Axial-Radial-Lager 23 geführt, kann also relativ zu diesem Lager 23 gedreht werden und wird bei ihrer Verdrehung zusammen mit dem Schlitten 14 in ihrer Axialrichtung gemäß dem Doppelpfeil Pf 1 in Fig. 5 und Fig. 7 verstellt.

In Fig. 5 und 7 erkennt man außerdem, daß die Spindel 21 an einem über das Maschinengestell überstehenden Teil 24 als Skalenträger ausgebildet ist. Sie könnte in diesem Bereich auch ein Meßgerät oder ein auf ein Meßgerät wirkendes Übertragungselement aufweisen. Dabei ist die Verstellspindel 21 mit einem aufsteckbaren Antriebselement, in diesem Falle einer Handkurbel als Teil 24 kuppelbar, wobei die Kupplungsstelle 25 innerhalb des Maschinengestelles angeordnet ist. Bei abgezogener Handkurbel 24 kann also die Tischplatte zusammen mit dem an ihr hängenden Schlitten 14 verdreht werden, ohne daß Rücksicht auf die Spindel 21 genommen werden muß. Dabei sieht man in Fig. 5 und 7 auch deutlich, daß eine Skala 26 auf der Kurbel 24 angeordnet ist, so daß in Kupplungsstellung der Kurbel 24 der Benutzer auch erkennt, wo der Schlitten 14 jeweils steht.

Es sei noch erwähnt, daß das Maschinengestell im Wege des Horizontal-Schlittens eine zumindest dessen äußeren Abmessungen entsprechende Lochung für einen teilweisen Durchtritt des Schlittens 14 durch die Wandung des Maschinengestelles haben könnte, falls ein noch größerer Schlittenweg erwünscht ist, als er in Fig. 5 und 7 als äußerste Verstellung nach der Seite des festen Anschlages 13 hin dargestellt ist. Gegebenenfalls läßt sich aber vor allem durch diese Maßnahme auch das Maschinengestell selbst verkleinern und platzsparender gestalten, ohne den Verstellweg des Schlittens 14 zu schmälern.

Eine abgewandelte Ausführungsform einer Kaltkreissäge 1 zeigt Fig. 10. Dabei sind alle vorbeschriebenen Merkmale und Maßnahmen ebenfalls erfüllt, so daß die einzelnen, mit gleichen Bezugszahlen versehenen Teile nicht erneut beschrieben sind. Es ist lediglich die Auflageplatte 3 nicht gegenüber dem Maschinengestell 7 drehbar gelagert, sondern das Maschinengestell 7 mit der Auflageplatte 3 und dem daran befestigten Schlitten 14 ist insgesamt drehbar an einem Sockel 26 gelagert. Man erkennt deutlich in Fig. 10 im unteren Bereich des Maschinengestelles 7 das Wälzlager 15, welches in diesem Falle den kreisrunden Sockel 26 etwas übergreift und die erwähnte Drehbarkeit des Maschinengestelles 7 gegenüber diesem Sockel 26 erlaubt. Demgemäß braucht die Auflageplatte nicht auch drehbar zu sein, obwohl dies noch zusätzlich der Fall sein könnte.

**Patentansprüche**

1. Kaltkreissäge (1), bei welcher das Sägeblatt (6) beim Sägen von unten her durch einen Schlitz (2) od.dgl. einer Auflageplatte (3) eines Auflagetisches (4) für das zu bearbeitende Material (5) nach oben bewegbar ist, wobei die Auflageplatte (3) gegenüber dem Maschinengestell (7) und einem festehenden oberen Tisch-Bereich (8) um eine vertikale Achse (9) drehbar gelagert ist und der Antrieb (10) für das Sägeblatt (6) sowie für seinen Vorschub (12) unterhalb dieser drehbaren Platte (3) angeordnet ist, **dadurch gekennzeichnet** daß das Sägeblatt (6) mit seinem Antrieb (10) von einem unmittelbar unter der drehbaren Tischplatte (3) angeordneten, quer zur Drehachse (9) der Tischplatte (3) verstellbaren und festlegbaren Schlitten (14) getragen ist.

2. Kaltkreissäge nach Anspruch 1, dadurch gekennzeichnet, daß das am Rand der drehbaren Tischplatte (3) vorgesehene Wälzlager (15) innerhalb der von der Tischplattendicke eingenommenen Höhe vorzugsweise an einem am umlaufenden Rand der Tischplatte (3) vorgesehenen Absatz (16) od.dgl., angeordnet ist und der Schlitten (14) unmittelbar unterhalb der Tischplatte (3) mit seinen in den beiden Verschieberichtungen äußeren Bereichen vorzugsweise über die Abmessung der Tischplatte (3) hinaus bis in den Bereich unterhalb des feststehenden Teiles des Tisches (4) verschiebbar ist.

3. Kaltkreissäge nach Anspruch 1 oder 2, dadurch gekennzeichnet, daß die Oberseite des das Sägeblatt (6) und seinen Antrieb (10) tragenden Schlittens (14) unmittelbar unter der Unterseite der Auflageplatte (3) angeordnet ist.

4. Kaltkreissäge nach einem der Ansprüche 1 bis 3, dadurch gekennzeichnet, daß der Schlitten (14) auch den Vorschubantrieb (12) für das Sägeblatt (6) trägt.

5. Kaltkreissäge nach einem der Ansprüche 1 bis 3, dadurch gekennzeichnet, daß der Vorschubantrieb für das Sägeblatt an dem Auflagetisch, insbesondere an der drehbaren Auflageplatte (3) befestigt ist und über Schwenklager einerseits an seiner Halterung (20) und andererseits an einem das Sägeblatt tragenden, vertikal verstellbaren Schlitten oder nach oben schwenkbaren Schwenkarm angreift.

6. Kaltkreissäge nach einem der Ansprüche 1 bis 5, dadurch gekennzeichnet, daß für die Horizontalverstellung des Sägeblattantriebes und des ihn tragenden Schlittens (14) eine mit ihrer Achse in Verschieberichtung angeordnete Spindel (21) vorgesehen ist.

7. Kaltkreissäge nach einem der Ansprüche 1 bis 6, dadurch gekennzeichnet, daß die für die Verstellung des Horizontal-Schlittens (14) dienende Spindel (21) in eine mit der Tischplatte (3) fest verbundene Mutter (22) eingreift und an dem Schlitten (14) in einem Axial-Radial-Lager (23) geführt ist.

8. Kaltkreissäge nach einem der Ansprüche 1 bis 7, dadurch gekennzeichnet, daß die Spindel (21) an einem über das Maschinengestell (7) überstehenden Teil (24) als Skalenträger ausgebildet ist oder ein auf ein Meßgerät wirkendes Übetragungselement aufweist.

9. Kaltkreissäge nach einem der Ansprüche 1 bis 8, dadurch gekennzeichnet, daß die Verstellspindel (21) mit einem aufsteckbaren Antriebselement, vorzugsweise einer Handkurbel (24), kuppelbar ist, wobei die Kupplungsstelle (25) innerhalb des Maschinengestelles (7) angeordnet ist.

10. Kaltkreissäge nach einem der Ansprüche 1 bis 9, dadurch gekennzeichnet, daß das Maschinengestell (7) im Wege des Horizontal-Schlittens (14) eine zumindest dessen äußeren Abmessungen entsprechende Lochung für einen teilweisen Durchtritt des Schlittens (14) durch die Wandung des Maschinengestelles (7) hat.

11. Kaltkreissäge nach einem der vorstehenden Ansprüche, dadurch gekennzeichnet, daß das Maschinengestell (7) mit dem Schlitten (14) insgesamt drehbar an einem Sockel (26) gelagert ist.

12. Kaltkreissäge nach einem der vorstehenden Ansprüche, dadurch gekennzeichnet, dß für den Antrieb der Spindel (21) ein Motor vorzugsweise unter der Tischplatte (8) oder Auflageplatte (3), vorgesehen ist.

## Claims

1. A cold circular saw (1) wherein, during sawing, the saw blade (6) is upwardly movable through a slot (2) or the like in a supporting plate (3) from underneath a supporting table (4) for the material (5) to be cut, the supporting plate (3) being rotatably mounted relative to the machine frame (7) and a stationary upper table area (8) about a vertical axis (9) and the drive (10) for the saw blade (6) as well as for feed (12) of said saw blade being arranged underneath said rotatable plate (3), **characterized in that** the saw blade (6) together with the drive (10) thereof is carried by a carriage (14) which is arranged directly under the rotatable table top (3) and is adapted to be adjusted and located in position transversely to the axis of rotation (9) of the table top (3).

2. A cold circular saw as claimed in claim 1, characterized in that the rolling bearing (15) provided at the edge of the rotatable table top (3) is arranged within the height occupied by the thickness of the table top, preferably at a shoulder (16) or the like provided at an edge running round the table top (3) and the carriage (14) is movable directly underneath the table top (3) and has the outer zones thereof in both directions of travel preferably passing beyond the dimension of the table top (3) into the area underneath the stationary part of the table (4).

3. A cold circular saw as claimed in claim 1 or claim 2, characterized in that the upper side of the carriage (14) carrying the saw blade (6) and saw blade drive (10) is arranged directly under the underside of the supporting plate (3).

4. A cold circular saw as claimed in any one of claims 1 to 3, characterized in that the carriage (14) also carries the feed drive (12) for the saw blade (6).

5. A cold circular saw as claimed in any one of claims 1 to 3, characterized in that the feed drive for the saw blade is attached to the supporting table, particularly to the rotatable supporting plate (3), and the feed drive by way of swivel bearings acts on the one hand upon the support (20) thereof and on the other hand upon a vertically adjustable carriage carrying the saw blade or upon a swivel arm adapted to swivel upwards.

6. A cold circular saw as claimed in any one of claims 1 to 5, characterized in that for the saw blade drive and the carriage (14) carrying the same to be adjusted horizontally, a spindle (21) is provided having the axis thereof arranged in the direction of travel.

7. A cold circular saw as claimed in any one of claims 1 to 6, characterized in that the spindle (21) serving for adjustment of the horizontal carriage (14) engages with a nut (22) fixed to the table top (3) and is guided at the carriage (14) in a thrust-radial bearing (23).

8. A cold circular saw as claimed in any one of claims 1 to 7, characterized in that the spindle (21), at a part (24) projecting from the machine frame (7) takes the form of a scale plate or has a transmission element acting on a measuring instrument.

9. A cold circular saw as claimed in any one of claims 1 to 8, characterized in that the adjusting spindle (21) is adapted to be coupled to a detachable drive element, preferably a hand crank (24), the coupling point (25) being arranged within the machine frame (7).

10. A cold circular saw as claimed in any one of claims 1 to 9, characterized in that the machine frame (7) has in the path of the horizontal carriage (14) a hole which corresponds at least to the external dimensions of the latter and serves for partial passage of the carriage (14) through the wall of the machine frame (7).

11. A cold circular saw as claimed in any one of the preceding claims, characterized in that the machine frame (7) together with the carriage (14) is as a whole rotatably mounted to a base (26).

12. A cold circular saw as claimed in any one of the preceding claims, characterized in that a motor is provided, preferably under the table top (8) or supporting plate (3), for the drive of the spindle (21).

**Revendications**

1. Scie circulaire à froid (1), dans laquelle la lame de soie (6), lors du sciage, peut être déplacée de bas en haut à travers une fente (2), ou similaire, d'une plaque d'appui (3) d'une table d'appui (4) destinée au matériau à usiner (5), la plaque d'appui (3) étant montée tournante autour d'un axe vertical (9) par rapport au bâti (7) de la machine et à une région supérieure fixe (8) de la table, et l'entraînement (10) destiné à la lame de scie (6), ainsi qu'à l'avance (12) de celle-ci, étant disposé au-dessous de cette plaque tournante (3), caractérisée par le fait que la lame de soie (6) est portée avec son entraînement (10) par un chariot (14) qui est disposé immédiatement au-dessous de la plaque de table tournante (3), qui peut être déplacé transversalement par rapport à l'axe de rotation (9) de la plaque de table (3) et qui peut être fixé.

2. Scie circulaire à froid selon la revendication 1, caractérisée par le fait que le palier de roulement (15) qui est prévu sur le bord de la plaque de table tournante (3) est disposé à l'intérieur de la hauteur occupée par l'épaisseur de la plaque de table et, de préférence, sur un épaulement (16) ou similaire prévu sur le bord annulaire de la plaque de table (3), et que le chariot (14) peut être déplacé immédiatement au-dessous de la plaque de table (3) par ses régions qui sont à l'extérieur dans les deux sens de coulissement, de préférence au-delà de la dimension de la plaque de table (3), et jusque dans la région située au-dessous de la partie fixe de la table (4).

3. Scie circulaire à froid selon la revendication 1 ou 2, caractérisée par le fait que le côté supérieur du chariot (14) qui porte la lame de scie (6) et son entraînement (10) est disposé immédiatement au-dessous du côté inférieur de la plaque d'appui (3).

4. Scie circulaire à froid selon l'une des revendications 1 à 3, caractérisée par le fait que le chariot (14) porte aussi l'entraînement d'avance (12) destiné à la lame de scie (6).

5. Scie circulaire à froid selon l'une des revendications 1 à 3, caractérisée par le fait que l'entraînement d'avance qui est destiné à la lame de scie est fixé à la table d'appui et, en particulier, à la plaque d'appui tournante (3), et qu'il vient en prise avec son support (20), d'une part, et, d'autre part, avec un chariot qui porte la lame de scie et qui peut être déplacé verticalement, et ce, par l'intermédiaire de paliers de pivotement, ou encore avec un bras pivotant qui peut pivoter vers le haut.

6. Scie circulaire à froid selon l'une des revendications 1 à 5, caractérisée par le fait que, pour le déplacement horizontal de l'entraînement de la lame de scie et du chariot (14) qui le porte, il est prévu une broche (21) qui s'étend par son axe dans la direction de coulissement.

7. Scie circulaire à froid selon l'une des revendications 1 à 6, caractérisée par le fait que la broche (21) qui sert au déplacement du chariot horizontal (14) vient en prise dans un écrou (22) solidaire de la plaque de table (3), et qu'elle est guidée sur le chariot (14) dans un palier à charge axiale et radiale (23).

8. Scie circulaire à froid selon l'une des revendications 1 à 7, caractérisée par le fait que la broche (21) porte une graduation sur une partie (24) que fait saillie au-delà du bâti (7) de la machine, ou qu'elle comporte un élément de transmission agissant sur un appareil de mesure.

**9.** Scie circulaire à froid selon l'une des revendications 1 à 8, caractérisée par le fait que la broche de déplacement (21) peut être accouplée à un élément d'entraînement pouvant être enfoncé, et de préférence à une manivelle (24), l'endroit de l'accouplement (25) étant disposé à l'intérieur du bâti (7) de la machine.

**10.** Scie circulaire à froid selon l'une des revendications 1 à 9, caractérisée par le fait que le bâti (7) de la machine comporte, sur le trajet du chariot horizontal (14), une ouverture qui correspond au moins aux dimensions extérieures de celui-ci et qui est destinée à faire passer partiellement le chariot (14) à travers la paroi du bâti (7) de la machine.

**11.** Scie circulaire à froid selon l'une des revendications précédentes, caractérisée par le fait que le bâti (7) de la machine est monté tournant dans son ensemble avec le chariot (14) sur un socle (26).

**12.** Scie circulaire à froid selon l'une des revendications précédentes, caractérisée par le fait que, pour l'entraînement de la broche (21), il est prévu un moteur, de préférence sous la plaque de table (8) ou la plaque d'appui (3).

Fig.1

Fig. 3

Fig. 2

Fig.4

Fig. 5

Fig. 6

Fig. 9

Fig. 7

Fig. 8

Fig.10